# EUROPEAN PATENT APPLICATION

(11) **EP 1 267 509 A1**
(43) Date of publication of application: **18.12.2002**
(21) Application number: 01440166.5
(22) Date of filing: 12.06.2001
(51) Int. Cl.: H04J 14/02

(54) **Method of organizing wavelength channels in a WDM network and optical hub, optical add/drop multiplexer and optical filter bank therefor**

(71) Applicant: ALCATEL, 75008 Paris (FR)
(72) Inventor: Bisson, Arnaud, 91400 Orsay (FR); Noirie, Ludovic, 92220 Bangeeux (FR)
(74) Representative: Brose, Gerhard

(57) **Abstract**

The invention relates to a Method in a wavelength-division multiplexed (WDM) network to organize (wavelength) channels between (optical) nodes (M1) of said WDM network, wherein the nodes (M1) each have optical filters (FAD, FDH1, F1, ..., F1) for selecting a first set of wavelengths with respect to a set of other wavelengths and wherein, in each case, the wavelengths of one of these sets are forwarded and the other set of wavelengths is dropped, wherein at least one node (M1) has both at least one statically preset optical filter (FAD, FDH1) and at least one optical filter (F1, ..., F1) that can be dynamically tuned during operation and in that only respective dynamic optical filters (F1, ..., F1) in the affected nodes (M1) have to be tuned in the event of a dynamic reconfiguration of channels, and also to an optical wavelength multiplexed (WDM) network, an optical hub and an optical add/drop multiplexer for the purpose.

## Description

The invention relates to a method in a wavelength-division multiplexed (WDM) network to organize wavelength channels between optical nodes according to the preamble of Claim 1 and to a WDM network according to the preamble of Claim 3, an optical hub according to the preamble of Claim 6, an add/drop multiplexer according to the preamble of Claim 7 and an optical filter bank according to the preamble of Claim 8.

Regional or urban networks (metropolitan area networks, MAN) are increasingly being constructed as purely optical networks whose nodes add and drop light signals by means of (optical network) nodes, connected by means of optical waveguides, without converting said signals opto-electrically. In this connection, the nodes of such a network serve, on the one hand, to create connections to local networks (local area network, LAN) and, on the other hand, generally to create a connection to a wide-area network (WAN). For reliability reasons, inter alia, regional networks are frequently of ring-type design, i.e. an optical ring network having nodes as described above forms a closed optical ring.

In modern optical networks, a so-called wavelength-division multiplex method (WDM) is nowadays predominantly used in which a number of modulated optical carriers whose frequencies differ are simultaneously transmitted in the optical waveguide. The mutual optical influencing of the individual wavelengths (crosstalk) is so small under these circumstances that each of the said carriers can be formed as an independent (wavelength) channel. A WDM ring network consequently corresponds to a number of parallel virtual rings, said number corresponding to the number of different wavelengths of the WDM system. In current WDM (transmission) systems having so-called dense wavelength-division multiplexing (DWDM), for example, 40 channels are transmitted that have an equidistant frequency spacing of down to 50 GHz.

An important object for the economic utilization of existing transmission resources of a network is to match said network to current transmission requirements. For a WDM network, this means that the channel relations between the node elements, i.e. sources and drains of individual channel signals, have to be flexible or dynamically reconfigurable. If, for example, there is a currently increased communication requirement between two nodes, a certain number of flexible channels that are free or are no longer needed for other communication relations is reserved for said communication relation.

Complete flexibility can be achieved in a WDM network of known dimensions by dropping all the wavelengths of the WDM signal at every node. Every wavelength is then fed, for example, to a respective optical switch from which the relevant wavelength is then either fed back into the WDM network or to an optical receiver. This solution is, however, very complex, not least because of the large number of optical switches needed. Frequently, complete flexibility is not needed at all. It is frequently sufficient, for example, to provide a certain number of flexible channels that can be allocated in a currently relevant manner to avoid bottlenecks for the requirement proceeding from the normal communication need.

Patent Specification US 6069719 describes a reconfigurable add/drop multiplexer in which a fixed number of defined wavelengths are dropped by means of a static Bragg filter (Bragg fibre grating) from an optical waveguide. Said wavelengths provided for dynamic reconfiguration and dropped from the optical waveguide are demultiplexed by means of a demultiplexer and fed in each case to an optical switch (bypass switch). Depending on the position of the switch, the relevant wavelength is either added again to the optical waveguide or fed to a connected optical receiver. One problem is that, regardless of how many of said wavelengths provided for dynamic reconfiguration are actually intended for forwarding to the optical receiver, all said wavelengths have to be dropped from the optical waveguide. As the number of wavelengths increases and the degree of flexibility increases, a corresponding number of optical switches has to be provided. Since optical switches are complicated and expensive, an appropriate add/drop multiplexer is likewise complicated and expensive. A further problem in the continuous use of such add/drop multiplexers as nodes of a WDM network arises as a result of the fact that a signal transmitted over a reconfigurable or flexible channel is dropped from the optical waveguide at every node between its source and its drain, fed via an optical switch and then added again; said signal consequently undergoes a multiple attenuation that is not insubstantially due to the optical switches. As the number of nodes increases, the attenuation of flexible channels may become undesirably high compared with permanently configured channels.

Patent Specification US 6084694 describes a ring network, where wavelength channels are grouped into bands. Each node of the network drops each selected bands and passively forwards each the other bands. However, it is not disclosed in this specification to dynamically reconfigure bands or channels in the network.

The object of the invention is to create a method and means suitable therefor to organize the wavelength channels of a WDM network into bands (of channels) or channels with at least two different classes, where one of the classes consists of bands or channels for dedicated traffic and another class consists of bands or channels for flexible traffic between optical nodes.

This object is achieved, according to the invention, by a method according to the teaching of Claim 1, a WDM network according to the teaching of Claim 3, an optical hub according to the teaching of Claim 6, an optical add/drop multiplexer according to the teaching of Claim 7 and an optical filter bank according to the teaching of Claim 8.

It is always assumed below that the WDM network is a ring-type WDM network since ring-type networks are very suitable, in particular, for a WDM system employing add/drop multiplexers. The invention may, however, also be applied to networks of different topology, for example, star-type networks. The terms channel and wavelength are often used here synonymously just as in the specialist literature. In this connection, the term channel is primarily used if a communication relation is involved, whereas the term wavelength is preferred if physical operations, for example the filtering and reflection of individual wavelengths from a WDM signal, are involved.

The basic idea of the invention is that, in order to organize channels or channel relations in a WDM network, those nodes that take part in flexible traffic have, in addition to statically preset optical filters for selecting wavelengths of predefined node relations, also optical filters that can be tuned during operation for selecting wavelengths of flexible channel relations. In a dynamic reconfiguration of channels, only those adjustable or tunable (or tuneable) optical filters of nodes affected by the dynamic reconfiguration are adjusted or retuned.

Further refinements of the invention are to be found in the dependent claims and in the description below.

The invention is explained further below with the aid of the accompanying drawings:
- Figure 1: shows diagrammatically a WDM (ring) network according to the invention having nodes shown by way of example and a control device,
- Figure 2: shows the communication channels fed by way of example via the nodes shown in Figure 1,
- Figure 3: shows by way of example a channel and band control in an add/drop multiplexer according to the invention,
- Figure 4a: shows diagrammatically an exemplary physical structure of an add/drop multiplexer according to the invention,
- Figure 4b: shows diagrammatically an exemplary physical structure of a hub according to the invention and
- Figure 5: shows an exemplary band arrangement in a WDM ring network.

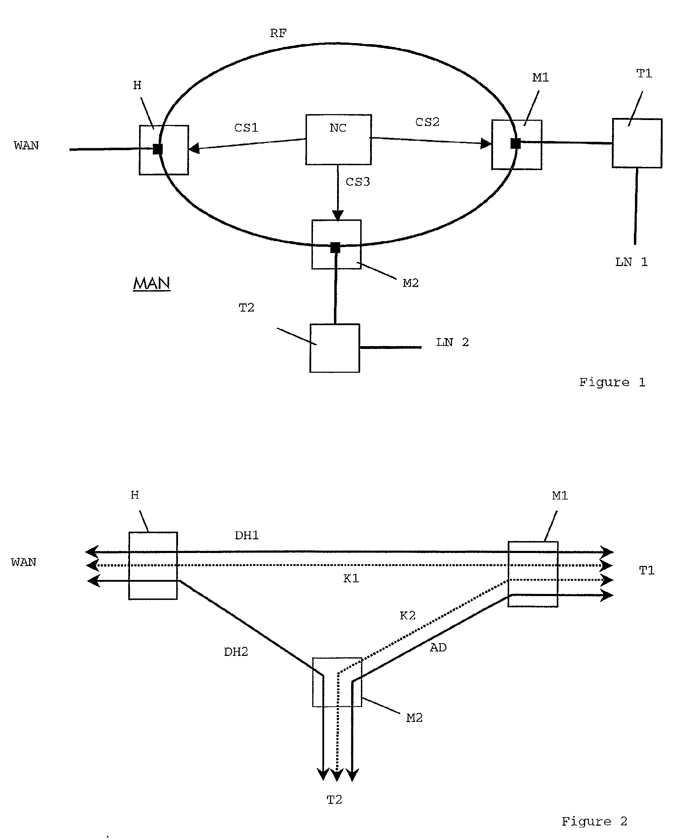

Figure 1 shows a WDM ring network MAN, referred to below simply as network MAN, having a ring-type optical waveguide RF, referred to below as ring RF for short, and nodes H, M1 and M2. Shown as nodes are a hub H and, by way of example for a number of further nodes two add/drop multiplexers M1 and M2. The hub H is connected to a wide-area network WAN. The add/drop multiplexers M1 and M2 are each connected via (optical) terminal devices T1 and T2 to local networks LN1 and LN2, respectively. A control device NC transmits via control channels not shown here a first control signal CS1 to the hub H1, a second control signal CS2 to the first add/drop multiplexer M1 and a third control signal CS3 to the second add/drop multiplexer M2.

The add/drop multiplexers M1 and M2 drop one or more channels from the totality of the channels fed to the input and forward the remaining channels without modification. The dropped channels are connected to the inputs of the terminal devices T1 and T2, respectively; the same number of channels, in the simplest case of the same wavelength, is fed back again to the add/drop multiplexer at the output and added into (added to) the network MAN. While not shown here, a wavelength conversion may optionally also take place before adding into the network MAN.

The hub H having in principle identical tasks to those of the add/drop multiplexers M1 and M2 of dropping and adding particular channels serves to create a connection to a wide-area network WAN; from the point of view of task, the difference between the add/drop multiplexers and a hub is that the add/drop multiplexers M1 and M2 each as a rule forward substantially more channels than they separate out or dropped, whereas the hub drops as a rule most of the channels arriving at the input for communication with the wide-area network WAN and correspondingly adds the same number of channels.

Figure 2 shows the exemplary logical channel relations via the nodes H, M1 and M2 shown in Figure 1. The bands DH1, DH2 and AD shown as continuous lines are in this case a selection of static or predefined bands of channels in the network MAN. The channels K1 and K2 shown as broken lines are a selection of dynamically tunable or flexible channels. The first band DH1 and the first flexible channel K1 proceed from the wide-area network WAN via the hub and the first add/drop multiplexer M1 to the first local network L1. The second band DH2 proceeds from the wide-area network WAN via the hub and the second add/drop multiplexer M2 to the second local network LN2. The internal ring band AD and the second flexible channel K2 proceed from the first local network LN1 via the first add/drop multiplexer M1 and the second add/drop multiplexer M2 to the second local network LN2.

The channels of the predefined bands DH1, DH2 and AD are statically configured, i.e. their sources and drains are fixed prior to operating the network MAN. In this connection, the communication relations, i.e. sources and drains of the flexible channels K1 and K2, may be tuned according to communication needs. For this purpose, the control device NC transmits appropriate control signals CS1, CS2 and CS3 to the nodes H, M1 and M2, respectively.

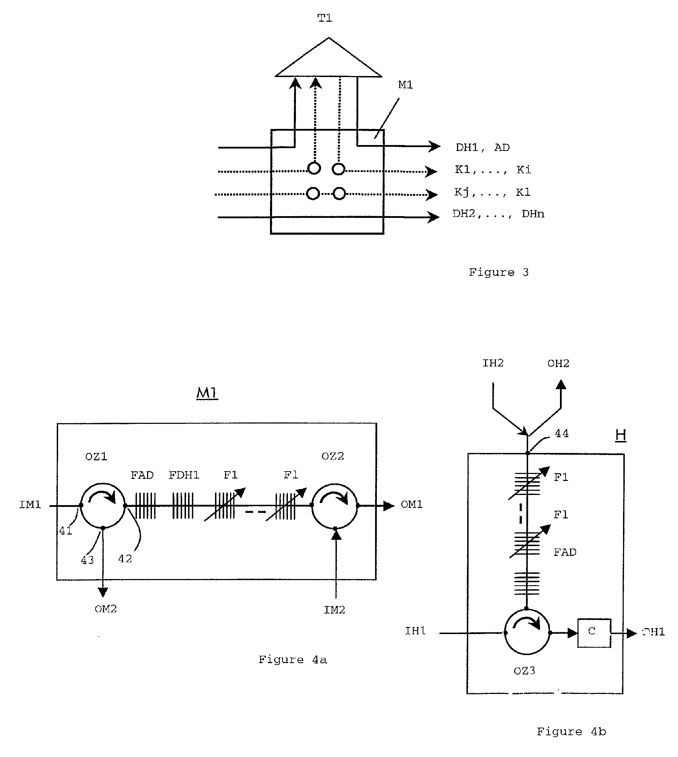

Figure 3 shows by way of example a channel and band control in the first add/drop multiplexer M1 of the network MAN. The bands DH1, DH2 and AD from Figure 2 shown as continuous lines and further bands DH3-DHn shown here are predefined bands of channels. The flexible channels K1 and K2 and further flexible channels F3 - F1 shown as broken lines are dynamically reconfigurable channels. The bands DH1 and AD and the channels K1-Ki are fed to the terminal device T1 and from there back again to the first add/drop multiplexer M1. The bands DH2-DHm and the channels Kj-Kl are forwarded unmodified, i.e. said add/drop multiplexer M1 is optically transparent to these bands or channels in the ideal case, i.e. in the case of negligible optical attenuation.

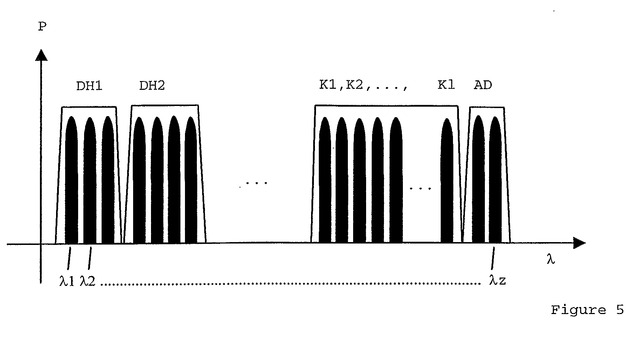

Figure 4a shows diagrammatically an exemplary physical structure of add/drop multiplexers according to the invention, in this case using the example of the first multiplexer M1 from the preceding figures. A first multiplexer input signal IM1 proceeds to a first port 41 of a first (optical) circulator OZ1. A second port 42 is connected via an optical filter bank to a first broad-band filter FAD, a second broad-band filter FDH1 and tunable (channel) filters F1-F1 connected in series downstream to a first port of a second (optical) circulator OZ2. From a third port 43 of the first circulator OZ1, a second multiplexer output signal OM2 emerges from the first add/drop multiplexer M1. A second multiplexer input signal IM2 proceeds to a third port of the second circulator OZ2 and, from a second port 43 of the first circulator OZ1, a first multiplexer output signal OM1 emerges from the first add/drop multiplexer M1. The circulators OZ1 and OZ2 are each configured in such a way that an optical signal arriving at a first port is dropped again at a second port in the clockwise direction and an optical signal arriving at a second optical port is dropped again at a third port in the clockwise direction.

The input and output signals IH1, OH1, IM1 and OM1 described below are WDM signals having a number of n wavelengths (signals). The first multiplexer input signal IM1 arriving at the first port 41 of the first circulator OZ1 is brought out again at the second port 42 of the first circulator OZ1. A first part of the channels of said signal IM1, the channels of the bands AD and DH1 are reflected at one of the static broad-band filters FAD or FDH1 and selectable, i.e. reconfigurable channels, are reflected at one of the tunable filters F1-F1 connected in series to the second port 42 of the first circulator OZ1 and are brought out there at the third port 43 as the second multiplexer output signal OM2. The signal OM2 is then fed, for example, to a terminal device, not shown here, that, if the signal OM2 contains a plurality of channels, demultiplexes said channels of the signals OM2, demodulates them and decodes and processes the information contained in them. Relevant new information is then coded and modulated and the relevant channels multiplexed and fed to the multiplexer M1 as second multiplexer input signal IM2. A second part of the channels of the first multiplexer input signal IM2 brought out at the second port 42 of the first circulator OZ1 traverses the said filters FAD, FDH1, F1-F1 without optical modification except for a possibly small optical attenuation and is fed to the second circulator OZ2, which multiplexes said signal with the second multiplexer input signal IM2 and outputs it as first multiplexer output signal OM1.

The said filters FAD, FDH1, F1-F1 are implemented, for example, as Bragg gratings integrated in the optical waveguide (in-fibre Bragg gratings), referred to below simply as Bragg filters. Whereas, as is known from the prior art, the broad-band filters can be implemented by a certain non-equidistant distribution of the reflection planes of the said Bragg filters, the tunable Bragg filters are implemented as narrow-band filters having equidistant reflection planes whose mutual spacing can be varied within certain limits by expanding the optical waveguide, for example, by means of piezoelectric effects. Such techniques are likewise known from the prior art. The said filters FAD, FDH1, F1-F1 can also be implemented by means of further filters known from the prior art. Thus, for example, the tunable filters F1-F1 can also be implemented as tunable Fabry-Perot filters or as set of static filters switched by means of optical switches.

The optical first circulator OZ1 may also be implemented as a semi-transparent optical mirror that has an analogous arrangement of ports to that of the first circulator OZ1. Said mirror is transparent to incident light signals, i.e. the first multiplexer input signal IM1 is fed from the first port 41 via the second port 42 to the said filters FAD, FDH1, F1-F1. The channels reflected from one of these filters to the port 42 are deflected by the said optical mirror to port 43 by reflection.

Instead of the second circulator OZ2, which multiplexes, or adds, the channels not dropped by the first circulator OZ1 with, or to, the channels of the second multiplexer input signal IM2, an optical coupler may alternatively be used.

As described in the introduction, an (optical) hub H frequently serves to create a connection to a wide-area network WAN. A hub H and an add/drop multiplexer can basically be used for identical tasks; from the point of view of tasks, the difference between an add/drop multiplexer and a hub is that an add/drop multiplexer, as a rule, forwards substantially more channels than it drops, whereas the hub, as a rule, drops most of che channels for communication with a wide-area network.

Figure 4b shows diagrammatically an exemplary physical structure of a hub according to the invention, shown here on the basis of the example of the hub H from the preceding figures. A first hub input signal IH1 proceeds to a first port of a third circulator OZ3. A second port in the clockwise direction of the third circulator OZ3 is connected via an optical waveguide to a first broad-band filter FAD known from Figure 4a and tunable filters F1-F1 are connected in series downstream to the hub port 44. From a third port in the clockwise direction of the third circulator OZ3, a first hub output signal OH1 emerges from the hub H via a wavelength converter C. A second hub output signal OH2 emerges from the said hub port 44 and a second hub input signal IH2 proceeds into the said hub port 44.

Those channels of the first hub input signal IH1 that are reflected by one of the said filters FAD, F1-F1, are fed back together with the channels of the second hub input signal IH2 arriving, for example, from a wide area network WAN not shown here as the first hub output signal OH1 into the ring RF. The remaining, unreflected channels are fed to the said wide-area network as second hub output signal OH2. The channels arriving as second hub input signal IH2 from said wide-area network are not modified by the said filters FAD, F1-F1. Since the second hub output signal OH2 and the second hub input signal IH2 are fed in different directions in the hub H via an optical waveguide, their channels must never have identical wavelengths. So that, in the example described here, the wavelengths of the channels of the first hub input signal IH1 and of the first hub output signal OH1 are identical, the wavelengths of the channels of the second hub input signal IH2 arriving in the hub are suitably converted. The wavelength converter C can be partly or completely eliminated if different wavelengths are provided in each case for both directions of communication relations between nodes of the network MAN.

The hub described here can in principle undertake the same tasks as an add/drop multiplexer described in relation to the preceding Figure 4. However, whereas, in the case of the add/drop multiplexer M1, filters have to be provided for those channels that are dropped from the ring RF, in the case of the hub H, filters have to be provided for those channels that remain in the network MAN. An add/drop multiplexer therefore has a number of filters that increases as the number of channels that have to be dropped increases, whereas a hub has an increasing number of filters as the number of channels that remain in the network RF increases.

The broad-band filters FAD and FDH1 may also be designed as a cascade of narrow-band filters for each wavelength of the relevant bands AD and FDH1, respectively.

The hub H and the first add/drop multiplexer M1 in Figure 4a are shown by way of example as nodes of a network MAN having one H and an indefinite number n of add/drop multiplexers. In this connection, the internal ring band AD is, by way of example, a band that remains in the network MAN and is always dropped at each add/drop multiplexer, fed to a terminal device, processed therein, fed back and added again. The first band DH1 is, by way of example, a band that serves the communication of the first terminal device T1 via the first add/drop multiplexer M1 and via the hub H with the wide-area network WAN. Not shown here are further, for example, n-1 add/drop multiplexers M2-Mn of the network MAN that always drop, instead of the first band DH1, another band of the bands DH2-DHn shown in Figure 3 for communication with the wide-area network WAN. A band structure of such a network will be explained by reference to Figure 5 below.

For this purpose, Figure 5 shows an exemplary band arrangement. Symbolically shown along the λ-axis (horizontal axis) are z (wavelength) channels λ1-λz. The first three channels are multiplexed by way of example to form the first band DH1. The next four channels are multiplexed by way of example to form the second band DH2. This is followed by the further bands DH3-DHn mentioned above, which are not shown here. A number 1 of flexible channels K1-K1 is then shown. On the far right, two channels are multiplexed by way of example to form the internal ring band AD.

Whereas the bands DH1-DHn and AD are, as described above, permanent bands with fixed communication relations, i.e. serve dedicated communication relations, the flexible channels K1-K1 serve flexible communication relations according to a current communication demand. For this purpose, the control device NC shown in Figure 1 transmits appropriate control signals to those nodes that are affected by a reconfiguration.

If, for example, a first flexible channel K1 that has hitherto been serving the communication of a first add/drop multiplexer M1 with the hub H is reconfigured in such a way that it is then intended to serve the communication of the second add/drop multiplexer M2 with the hub H, the control device NC transmits a first control signal CS1 to the first add/drop multiplexer M1 and a second control signal CS2 to the second add/drop multiplexer M2. The first add/drop multiplexer M1 is instructed by the first control signal CS1 not to drop the first flexible channel K1 any longer. For this purpose, the appropriate tunable filter F1 is modified so that it no longer reflects any of the wavelengths λ1, ..., λz present in the WDM system. In the case of a piezoelectrically tunable Bragg filter, for example, this can be achieved by applying a certain voltage as a controlled variable, as a result of which an optical wavelength provided with the Bragg filter changes in length in such a way that, instead of the wavelength of the first flexible channel K1, a wavelength is reflected that is situated between the first flexible channel K1 and an adjacent channel. The second add/drop multiplexer M2 is instructed by the control signal CS2 to drop the first flexible channel K1. For this purpose, its tunable filter F1 is accordingly tuned in such a way that the respective wavelength is reflected.

In a network described above, the flexible channels K1-K1 can be reconfigured between all the nodes of the network MAN. However, the appropriate tunable filters F1-F1 have to be provided for this purpose in every node M1, ..., Mn and H. This degree of flexibility often is not needed in a network MAN. A different number of droppable wavelengths may be provided depending on node. Thus for example, some nodes may be provided with a smaller number of tunable filters, each for a subset of the flexible channels present in the network.

It is possible to organize the channels of a network MAN according to different classes of service. The classes shows different degrees of flexibility. Classes of service without any flexibility are assigned to dedicated node relations or traffic. Examples for classes with dedicated node relations are each classes of fixed channels between add/drop multiplexers and the Hub DH1, DH2, .., DHn, of fixed channels that are added and dropped at each add/drop multiplexer or, not mentioned yet, of fixed channels between add/drop multiplexers. Classes of service with reduced flexibility are assigned to traffic between each a sub set of (pre-defined) nodes. Classes of service with full flexibility are assigned to traffic between all the nodes of the network MAN, to adapt the resource allocation to the traffic demand, i.e. this class shoes the channels K1- K1 described above.

For flexible channels that solely serve communication in the ring RF, permanently tuned filters may be provided in the hub H instead of tunable filters F1, ..., F1 or, if such channels are likewise to be multiplexed to form a band, a suitable broad-band filter may be provided in the hub H for said band.

## Claims

1. Method in a wavelength-division multiplexed (WDM) network (MAN) to organize (wavelength) channels between (optical) nodes (M1, M2, H) of said WDM network, wherein the nodes (M1, M2, H) each have optical filters (FAD, FDH1, F1, ..., F1) for selecting a first set of wavelengths (DH1, AD, K1, ..., Ki) with respect to a set of other wavelengths (DH2, ..., DHn, Kj, ..., Kl) and wherein, in each case, the wavelengths (λ1, ..., λz) of one of these sets are forwarded and the other set of wavelengths is dropped, **characterized in that** at least one node (M1, M2, H) has both at least one statically preset optical filter (FAD, FDH1) and at least one optical filter (F1, ..., F1) that can be dynamically tuned during operation and **in that** only respective dynamic optical filters (F1, ..., F1) in the affected nodes (M1, M2, H) have to be tuned in the event of a dynamic reconfiguration of channels.

2. Method according to Claim 1, **characterized in that** the wavelengths of those channels that serve predefined communication relations are at least partly multiplexed to form one or more bands (AD, DH1, ..., DHn) and said bands are selected by means of broad-band optical filters (FAD, FDH1) at affected nodes (M1, M2, H)

3. WDM network (MAN) comprising a number of nodes (M1, M2, H) having an optical waveguide (RF) connecting said nodes (M1, M2, H) and reconfiguration means for altering channel relations of the nodes (M1, M2, H) that each have optical filters (FAD, FDH1, F1, ..., F1) for separating a respective first set of wavelengths from a respective second set of wavelengths and means in each case for forwarding the wavelengths of one of said sets and for dropping the wavelengths of the other of said sets, **characterized in that** the filters (FAD, FHD1, F1, ..., F1) of at least one node have at least one statically preset filter (FAD, FDH1) and at least one dynamic filter (F1, ..., F1) that can be tuned for dynamic reconfiguration.

4. WDM network (MAN) according to Claim 3, **characterized in that** at least some of the optical filters (FAD, FDH1, ..., FDHn, F1, ..., F1) are designed as broad-band filters (FAD, FDH1, ..., FDHn) for filtering bands (AD, DH1, ..., DHn) of two or more adjacent wavelengths.

5. WDM network (MAN) according to Claim 3, **characterized in that** one of the nodes is a so-called hub (H) for accessing a higher-level optical network (WAN) and the other nodes are so-called add/drop multiplexers (M1, M2) for accessing in each case terminal devices or local networks (LN1, LN2), wherein the hub (H) has optical filters (FAD, F1, ..., F1) for selecting a set of wavelengths for forwarding in the WDM network (MAN) and the add/drop multiplexers (M1, M2) have optical filters (FAD, FDH1, F1, ..., F1) each having optical filters for selecting a respective set of wavelengths for dropping from the WDM network (MAN).

6. Optical hub (H) for use in a WDM network (MAN) having optical filters for separating a set of wavelengths for forwarding in the WDM network (MAN) **characterized in that**
• at least one of the optical filters (FAD) can be statically preset,
• at least one of the optical filters (F1, ..., F1) can be dynamically tuned,
• receiving means for receiving control signals (CS1) are present for the dynamic reconfiguration and
• calculating means are present for determining the controlled variables for tuning the dynamically tunable optical filters (F1, ..., F1).

7. Optical add/drop multiplexer (M1) for use in a WDM network (MAN) having optical filters (FAD, FDH1, F1, ..., F1) for separating a set of wavelengths for dropping the WDM network (MAN), **characterized in that**
• at least one of the optical filters (FAD, FDH1) can be statically preset,
• at least one of the optical filters (F1, ..., Fl) can be dynamically tuned,
• receiving means are present for receiving control signals (CS2) for the dynamic reconfiguration and
• calculating means are present for determining the controlled variables for tuning the dynamically tunable optical filters (F1, ..., F1)

8. Optical filter bank for use in an optical add/drop multiplexer (M1) or an optical hub (H) having optical filters (FAD, PDH1, F1, ..., F1) for reflecting some of the irradiating wavelengths, **characterized in that**
• at least one of the optical filters (FAD, FDH1) can be statically preset,
• at least one of the optical filters (F1, ..., F1) can be dynamically tuned and
• receiving means for receiving controlled variables are present for tuning the dynamically tunable optical filters (F1, ..., F1).
